# FASCICULE DE BREVET EUROPEEN

(11) **EP 4 189 572 B1**
(45) Date de publication et mention de la délivrance du brevet: **11.02.2026**
(21) Numéro de dépôt: 21762751.2
(22) Date de dépôt: 28.07.2021
(51) Int. Cl.: G06F 21/57, H04L 9/40

(54) **PROCEDE MIS EN OEUVRE PAR ORDINATEUR POUR TESTER LA CYBERSECURITE D'UN ENVIRONNEMENT CIBLE**
COMPUTERIMPLEMENTIERTES VERFAHREN ZUM TESTEN DER CYBERSICHERHEIT EINER ZIELUMGEBUNG
COMPUTER-IMPLEMENTED METHOD FOR TESTING THE CYBERSECURITY OF A TARGET ENVIRONMENT

(30) Priorité: 31.07.2020 FR 2008218
(43) Date de publication de la demande: 07.06.2023
(73) Titulaire: Institut National de Recherche en Informatique et en Automatique (INRIA), 78153 Le Chesnay Cedex (FR)
(72) Inventeur: LAHMADI, Abdelkader, 78153 Le Chesnay Cedex (FR); FRANCOIS, Jérôme, 78153 Le Chesnay Cedex (FR); BECK, Frédéric, 78153 Le Chesnay Cedex (FR)
(74) Mandataire: Vidon Brevets & Stratégie
(86) Numéro de dépôt international: PCT/FR2021/051410
(87) Numéro de publication internationale: WO 2022/023671

(56) Documents cités:
- US-B1- 9 069 930
- LIN ZHAOWEN ET AL: "Real-Time Intrusion Alert Correlation System Based on Prerequisites and Consequence", WIRELESS COMMUNICATIONS NETWORKING AND MOBILE COMPUTING (WICOM), 2010 6TH INTERNATIONAL CONFERENCE ON, IEEE, PISCATAWAY, NJ, USA, 23 September 2010 (2010-09-23), pages 1 - 5, XP031828348, ISBN: 978-1-4244-3708-5

## Description

L'invention concerne le domaine de la cybersécurité.

Dans l'industrie de la cybersécurité, divers outils commerciaux ou open source, techniques et méthodes existent pour la découverte passive ou active de vulnérabilités. Cela inclut de simples outils dits de « fuzzing » (injection de données aléatoires dans les logiciels), des programmes de tests de pénétration (« pentesting ») à l'image des campagnes de « bug bounty » réalisées par des hackers éthiques, jusqu'aux outils capables d'identifier automatiquement des vulnérabilités dans une cible.

Ces outils et analyses produisent des documents de sécurité dans un format structuré ou non, qui décrivent de manière succincte ou étendue des problèmes de sécurité, en particulier des vulnérabilités et leurs modes opératoires.

À titre d'exemple, un document de sécurité peut décrire une vulnérabilité dans un champ d'un message du protocole HTTP, envoyé par un attaquant vers un site web, développé avec une version de logiciel particulière. Ce message du protocole HTTP contient aussi une charge utile d'attaque spécifique, pour que l'attaquant obtienne une élévation de privilèges et devienne alors administrateur, ou ait accès aux mots de passe et login des utilisateurs de ce site.

Une fois qu'une vulnérabilité a été détectée et validée, elle est en général documentée par le biais d'une description rendue publique et publiée dans un format textuel standardisé, les CVEs (Common Vulnerabilities and Exposure). Cependant, les CVEs sont loin d'être entièrement standardisées, et il y a presque autant de variantes qu'il y a de CVEs, ce qui rend leur exploitation systématique impossible. De plus les CVEs ne sont pas les seuls formats de présentation de vulnérabilités, ni les seuls référentiels de publication.

Pour gérer ce problème, plusieurs travaux académiques ont proposé des ontologies et des modèles d'annotation pour l'analyse des descriptions textuelles associées aux vulnérabilités, à l'image des descriptions CVE, CWE, CAPEC, bulletins de sécurité, etc. Les techniques d'analyse utilisées sont basées sur les algorithmes développés dans le domaine du traitement automatique des langues, pour extraire automatiquement depuis ces documents des connaissances liées à la vulnérabilité ou à l'attaque, telles que la version du logiciel, la fonction cible, le moyen de l'attaque et sa conséquence.

Ces travaux académiques se focalisent principalement sur la construction de graphes de connaissances pour fournir une aide aux analystes, notamment en spécifiant des ontologies adaptées à ce domaine de connaissances.

Par exemple, le projet STUCCO propose une ontologie pour structurer des données issues de systèmes de détection d'intrusions, des flux réseaux, des CVEs, etc. Cela permet de collecter les données et de les structurer avec une ontologie qui lie différentes entités entre elles, à l'image de : logiciel, vulnérabilité, malware, attaquant, etc.

Un autre exemple est l'université de Maryland Baltimore County (UMBC), qui a proposé l'ontologie UCO dédiée à la cybersécurité pour structurer des documents textes et des structures standards de la sécurité comme CVE, CAPEC, CPE, CVSS, OpenIOC.

On peut aussi mentionner l'organisme MITRE, qui propose le standard STIX (Structured Threat Information expression) qui permet de structurer et d'unifier le partage des informations de sécurité, et fournit plusieurs extensions pour inclure des données depuis différentes sources. STIX permet aussi de décrire de multiples entités pour modéliser une menace et décrire les étapes génériques d'une chaîne d'attaque à l'image du concept Tactique, Technique et Procédures qui s'appuie sur différentes entités comme malware, pattern d'attaque, conséquences d'une attaque, etc.

Mais là encore, aucune ontologie n'est réellement prévalente, et les informations concernant les vulnérabilités sont éparpillées. En l'absence de vue cohérente des vulnérabilités, et afin d'aider à la gestion de la prévention du risque, plusieurs propositions ont été formulées pour modéliser les actions successives des attaquants pour mener à bien une attaque telles que les arbres d'attaques, les graphes d'attaques ou les réseaux de Petri. Ces modèles diffèrent selon le choix de la représentation (arbre, graphe, etc.) et les attributs qui le constituent (évènements, actions, logs réseaux, etc.).

Diverses demandes de brevets ont proposé des techniques pour la génération de graphes d'attaques et l'analyse des vulnérabilités.

Ainsi, WO2007/143226 A2 décrit une méthode pour générer automatiquement des graphes d'attaques, et établir des liens entre les états de l'attaque et ses prérequis en termes de vulnérabilités. Cette méthode décrit uniquement la génération d'un graphe de prérequis en reliant des états aux vulnérabilités pour établir un chemin d'attaque sur un ou plusieurs systèmes. Cependant, elle nécessite des entrées complexes, et ne peut pas se baser sur la seule connaissance de descriptions de vulnérabilités et de leurs contextes.

US 7 013 395 B1 décrit également une méthode de génération de graphes d'attaques pour analyser le risque, mais cette méthode se focalise exclusivement sur une approche basée sur des graphes où les nœuds représentent des états d'attaques, et les liens le changement d'état suite à une action de l'attaquant ou d'un utilisateur. Pour cela, elle utilise en entrée des templates structurés décrivant les étapes des attaques, ainsi que des fichiers de configuration décrivant les environnements cibles. Cela est complexe doit être revisité avec chaque nouvel environnement.

Enfin, l'article de Sheyneret al. "Automated generation and analysis of attack graphs", In Proceedings of the 2002 IEEE Symposium on Security and Privacy, SP '02, pages 273-, Washington, DC, USA, 2002. IEEE Computer Society, propose une méthode de génération de graphe d'attaques en utilisant le model checking pour trouver des chemins dans un système de transitions permettant de satisfaire certaines propriétés. Cette approche nécessite également en entrée une formalisation mathématique des états et transitions possibles, notamment en utilisant des préconditions. Elle est donc complexe et manque de souplesse.

Enfin, parmi les outils pour l'analyse de la cybersécurité, on peut retenir l'outil Nessus de la société tenable, qui permet de cartographier les vulnérabilités et fournir des rapports de scan, ainsi que les outils tenable.sc et tenable.io qui permettent de prioriser les vulnérabilités en associant leurs scores d'exploitabilité. En France, l'entreprise AMBIONICS SECURITY possède aussi une offre de surveillance de vulnérabilités pour les applications web qui consiste à cartographier, détecter et exploiter les vulnérabilités pour évaluer la sécurité des applications web. Le groupe Orange avec sa division cyberdefense offre aussi un SOC (Security Operating Center) pour la surveillance des vulnérabilités en mode géré, notamment le suivi et l'analyse des vulnérabilités.

Il apparaît de ce qui précède que la cybersécurité est donc un champ très éclaté avec une multitude d'approches et de solutions plus ou moins reliées entre elles. Il en résulte une forte dépendance aux opérateurs de ces outils, et il est impossible d'automatiser le test de la cybersécurité d'un environnement sans faire de lourds investissements. De plus, une fois un environnement testé, le moindre changement peut rendre caduque l'analyse sans qu'il soit aisé de prévenir les conséquences d'un tel changement.

L'invention vient améliorer la situation. À cet effet, elle propose un procédé mis en œuvre en œuvre par ordinateur pour tester la cybersécurité d'un environnement cible, comprenant :
a. Recevoir des données d'environnement cible comprenant des éléments logiciels,
b. Accéder à une base de données de vulnérabilités, chaque vulnérabilité étant définie par un tuple associant un identifiant de vulnérabilité, une liste de moyens définissant les moyens utilisés pour exploiter la vulnérabilité, et une liste de conséquences définissant les conséquences pour un exploiter la vulnérabilité, et en extraire une liste de vulnérabilités comprenant toutes les vulnérabilités comprenant un identifiant de vulnérabilité associé à un élément logiciel compris dans les données d'environnement cible,
c. Construire une liste de chaînes de vulnérabilités à partir de la liste de vulnérabilités en initialisant au moins un couple comprenant une liste vide comme liste courante et l'une des vulnérabilités de la liste de vulnérabilités comme vulnérabilité courante, et pour chaque couple, en exécutant les opérations suivantes
   c.1. Pour chaque vulnérabilité donnée de la liste de vulnérabilités distincte de la vulnérabilité courante et absente des tuples de la liste courante, comparer les conséquences de la vulnérabilité courante avec les moyens de la vulnérabilité donnée, et,
   c.2. À chaque fois qu'une similarité entre une conséquence de la liste de conséquences de la vulnérabilité courante avec un moyen de la liste de moyens de la vulnérabilité donnée est trouvée,
      c.2.i. Définir une ou plusieurs nouvelles chaînes en ajoutant à chacune des chaînes de la liste courante dont le dernier tuple comprend la vulnérabilité courante un tuple associant la vulnérabilité donnée, un identifiant de similarité, la conséquence de la liste de conséquences de la vulnérabilité courante, et le moyen de la liste de moyens de la vulnérabilité donnée,
      c.2.ii. Ajouter la ou les nouvelles chaînes à la liste de chaînes de vulnérabilités,
      c.2.iii. Répéter les opérations a. et b. avec la vulnérabilité donnée comme vulnérabilité courante, et la liste de chaînes de vulnérabilités comme liste courante.

Ce dispositif est particulièrement avantageux car il permet de générer de manière automatique des chaînes de vulnérabilités d'un environnement cible à partir de la seule description de ces composants et d'une base de données unifiée de vulnérabilités. Il n'est donc nullement besoin de formalisation complexe de l'environnement ou des attaques : la seule description des éléments qui le composent suffit.

Selon divers modes de réalisation, l'invention peut présenter une ou plusieurs des caractéristiques suivantes :
- l'opération c. comprend l'initialisation d'autant de couples qu'il y a de vulnérabilités dans la liste de vulnérabilités,
- l'opération c.2. comprend la détermination d'une valeur de similarité entre une conséquence de la liste de conséquences de la vulnérabilité courante et un moyen de la liste de moyens de la vulnérabilité donnée, et la détermination du fait que cette valeur de similarité est strictement supérieure à un seuil choisi,

- le seuil choisi est nul,
- lequel lorsque la conséquence de la liste de conséquences de la vulnérabilité courante est identique au moyen de la liste de moyens de la vulnérabilité donnée, la valeur de similarité vaut 1,
- les données d'environnement cible comprennent en outre des données de configuration d'élément logiciel et des données de relations entre éléments logiciels, dans lequel le tuple définissant une vulnérabilité comprend en outre une liste de données de contexte définissant le contexte logiciel dans lequel la vulnérabilité peut être exécutée, le procédé comprenant en outre
   d. Comparer les listes de données de contexte des vulnérabilités de chaque chaîne de vulnérabilité dans la liste de chaînes de vulnérabilités avec les données les données de configuration et/ou les données de relations entre éléments logiciels, et
   d.1. Stocker dans une première liste les chaînes de vulnérabilités dont les vulnérabilités comprennent des listes de données de contexte qui sont toutes contenues dans les données de configuration et/ou les données de relations entre éléments logiciels, et
   d.2. Stocker dans une deuxième liste les chaînes de vulnérabilités dont certaines seulement des vulnérabilités comprennent des listes de données de contexte contenues dans les données de configuration et/ou les données de relations entre éléments logiciels, et
- le procédé comprend en outre :
   e. Obtenir des exploits correspondants aux vulnérabilités des chaînes de vulnérabilités de la première liste et de la deuxième liste, mettre en œuvre les chaînes d'exploits de la première liste et de la deuxième liste avec ces exploits, et retourner les chaînes en les classant en fonction de leur appartenance à la première liste ou à la deuxième liste et en fonction du taux de réussite de leur mise en œuvre.

L'invention concerne également un programme informatique comprenant des instructions pour exécuter la méthode selon l'invention, un support de stockage de données sur lequel est enregistré ce programme d'ordinateur et un système informatique comprenant un processeur couplé à une mémoire sur laquelle est enregistré ce programme d'ordinateur.

D'autres caractéristiques et avantages de l'invention apparaîtront mieux à la lecture de la description qui suit, tirée d'exemples donnés à titre illustratif et non limitatif, tirés des dessins sur lesquels :
[Fig. 1] La figure 1 représente un schéma générique d'un système selon l'invention,
[Fig. 2] La figure 2 représente un diagramme générique des fonctions mises en œuvre par le système de la figure 1,
[Fig. 3] La figure 3 représente un exemple de mise en œuvre d'une fonction de la figure 2, [génération des chaînes], et
[Fig. 4] La figure 4 représente un exemple de mise en œuvre d'une fonction de la figure 3, [fonction récurrente].

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

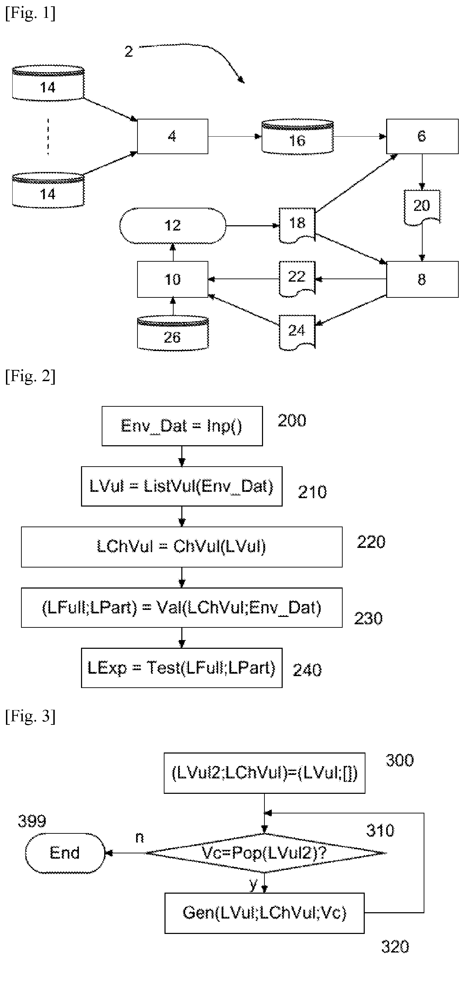

La figure 1 représente un schéma générique d'un système selon l'invention.

Comme on peut le voir sur cette figure, un système 2 selon l'invention comprend un unificateur 4, un extracteur 6, un validateur 8 et un testeur 10 d'un environnement cible 12.

Dans l'exemple décrit ici, l'unificateur 4 accède à une pluralité de sources de descriptions de vulnérabilités 14 pour produire une base de données de vulnérabilités 16. En variante, la base de données de vulnérabilités 16 pourrait être fournie directement, et l'unificateur 4 être omis.

L'unificateur 4 peut utiliser une technique de classification par apprentissage classique ou profond, un ensemble d'expressions régulières ou un ensemble de règles pour extraire les attributs des vulnérabilités. Pour cela, il prend en entrée la description d'une vulnérabilité transformée en séquence de n jetons {t1, t2, ..., tn} pour produire un ensemble {(ti, tj, ek)} tel que, pour chaque élément de cette liste d'entités nommées, i choisi entier dans la plage [1..n] est l'indice du premier jeton de l'entité nommée, j choisi entier dans la plage [1..n] est l'indice du dernier jeton de l'entité nommée et ek est une entité nommée de la liste des attributs cités précédemment.

L'annotation des jetons pour associer les jetons à leurs classes d'entités nommées peut être issue d'un travail manuel ou être réalisée par un réseau de neurones récurrents de type LSTM (Long Short-Term Memory), GRU (Gated Recurrent Unit) ou CNN (Convolutional Neural Network), ou encore par un modèle statistique de type CRF (Conditional Random Field) ou un HMM (Hidden Markov model), ou une combinaison de ces techniques.

Un exemple de réalisation non limitatif utilise un réseau de neurones récurrents (RNN) qui prend en entrée les jetons de la description textuelle de la vulnérabilité, puis associe à chaque jeton une représentation numérique sous forme d'un vecteur de plongement de mots (embedding). Ces vecteurs sont utilisés par le réseau de neurones pour calculer les contextes sémantiques de chaque jeton dans la séquence de jetons. Enfin, une étiquette (tag) est associée à chaque jeton. Cette étiquette représente à la fois son entité nommée et sa position dans cette entité, l'étiquette B indiquant le début de l'entité nommée, l'étiquette I une position intermédiaire dans l'entité nommée et l'étiquette E une position terminale du jeton dans l'entité nommée.

Les annotations peuvent être complétées par des mesures permettant d'établir des correspondances entre des conséquences de vulnérabilités. Cet ensemble de données peut être construit par un module de normalisation ou manuellement par un opérateur, ou encore automatiquement par un programme informatique utilisant une méthode d'apprentissage automatique, un ensemble d'expressions régulières ou un ensemble de règles. Le module de normalisation est une unité opérationnelle qui prend en entrée les séquences de moyens et conséquences extraites depuis les descriptions de vulnérabilités, et produit en sortie des séquences normalisées et équivalentes sémantiquement.

Par exemple, les séquences suivantes sont normalisées à la séquence {code, execution} :
- remote code execution
- RCE
- execute arbitrary code
- command execution
- run arbitrary code.

Un exemple de réalisation de ce module non limitatif utilise un réseau de neurones récurrents de type encodeur-décodeur basé sur des cellules LSTM ou GRU. Pour construire un corpus de séquences en entrée assez large qui permet de nourrir l'encodeur de ce réseau de neurones et améliorer ses prédictions, les opérations suivantes peuvent être appliquées sur les séquences en entrée de l'encodeur:
- Remplacement par un synonyme : remplacer un mot aléatoire choisi dans une séquence par un synonyme,
- Permutation de mots de la séquence : générer des permutations de mots d'une séquence,
- Suppression d'un mot : choisir aléatoirement un mot et le supprimer de la séquence.

Le bloc encodeur permet d'encoder dans un état caché une séquence fournie en entrée {execute, arbitrary, code}. Cet état caché est utilisé par le décodeur pour prédire une séquence de jetons équivalente sémantiquement à la séquence fournie entrée.

Les équivalences servent à associer les différentes formulations de la même cause ou conséquence, ou bien entre causes et conséquences. Les équivalences peuvent être directes ou indirectes, et ainsi dépendre du contexte dans lequel elles sont exprimées. Des poids ou indicateurs de similarité sont ainsi associés à ces équivalences selon le degré de fiabilité de celle-ci.

Par exemple, les causes improper input despecialization, improper input verification et improper input validation sont équivalentes avec une très forte similarité et donc un poids de 0,9. Par contre, la similarité entre les conséquences write application data et code injection est moindre, et n'a donc qu'une valeur de 0,7. Il va de soi que ces valeurs ne sont données qu'à titre purement indicatif.

Cet ensemble contient également un ensemble de liens de causalités pré-établis, soit manuellement par un opérateur, soit par un traitement automatique, permettant d'inférer des causes ou conséquences lorsque celles-ci sont absentes ou trop abstraites dans la description textuelle de la vulnérabilité. Ces liens se traduisent par l'énoncé de propriétés qui viennent enrichir celles découvertes sur le système cible, mais auxquelles une probabilité moindre sera affectée.

Par exemple, si une vulnérabilité a pour conséquence l'exécution d'un code arbitraire (code execution), les causes code injection ou write file sont sous-entendues, et donc énoncées avec une probabilité de 0,7.

En variante, l'unificateur 4 peut accéder à une ou plusieurs bases de vulnérabilités selon une ou plusieurs ontologies choisies.

L'extracteur 6 reçoit des données d'environnement logiciel 18 en entrée et accède à la base de données de vulnérabilités 16 pour produire en sortie une liste de chaînes de vulnérabilités 20.

Les données d'environnement logiciel comprennent une liste de configurations logicielles (éditeur, nom, version, etc.) présentes sur un environnement cible 12. Cette liste peut être spécifiée manuellement par un opérateur, par un outil de cartographie ou encore par un outil de recensement/gestion de parc informatique. Ces éléments permettent d'enrichir les informations de contexte d'une vulnérabilité, et permettent de valider l'exploitabilité d'une chaîne d'intrusion sur l'environnement cible 12.

Cette liste de chaînes de vulnérabilités 20 est fournie avec les données d'environnement logiciel 18 au validateur 8. Le validateur 8 a pour fonction d'explorer les chaînes de vulnérabilités identifiées compte tenu de l'environnement logiciel considéré. En sortie, le validateur 8 émet une liste de chaînes entièrement validées 22 et une liste de chaînes partiellement validées 24.

Enfin, la liste de chaînes entièrement validées 22 et la liste de chaînes partiellement validées 24 sont fournies au testeur 10, qui accède à une base de données d'exploits pour mettre en œuvre les chaînes de ces listes. En retour, le testeur 10 retourne un indicateur de succès pour chaque chaîne de vulnérabilités testée.

Dans le cadre de l'invention, toutes les données sont stockées sur une mémoire qui peut être tout type de stockage de données propre à recevoir des données numériques : disque dur, disque dur à mémoire flash, mémoire flash sous toute forme, mémoire vive, disque magnétique, stockage distribué localement ou dans le cloud, etc. Les données calculées par le dispositif peuvent être stockées sur tout type de mémoire similaire à la mémoire 4, ou sur celle-ci. Ces données peuvent être effacées ou conservées après que le dispositif ait effectué ses tâches.

De même, l'unificateur 6, l'analyseur 8 et le testeur 10 sont des éléments accédant directement ou indirectement aux données. Ils peuvent être réalisés sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, d'une puce dédiée de type FPGA ou SoC, d'une ressource de calcul sur une grille ou dans le cloud, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

Il apparaîtra également que l'unificateur 6, l'analyseur 8 et le testeur 10 sont présentés séparément afin de mieux expliquer les fonctions mises en œuvre par le système 2. En variante, ils pourront être réunis sous une seule unité, être découpés en sous-unités, partiellement regroupés, etc. dès lors que l'ensemble des fonctions décrites plus bas sont réalisées.

La figure 2 représente un exemple des fonctions mises en œuvre par le système de la figure 1.

Dans une première opération 200, le système 2 exécute une fonction Inp() dans laquelle les données d'environnement logiciel 18 sont entrées. La fonction Inp() peut par exemple s'appuyer sur une interface utilisateur par laquelle l'emplacement d'un fichier contenant les données d'environnement logiciel est désigné. En variante, ces données pourraient être rentrées manuellement, ou déterminées en partie de manière automatique.

Ensuite, dans une opération 210, une fonction ListVul() reçoit comme arguments les données d'environnement logiciel 18 et interroge la base de données de vulnérabilités 16. En retour, la fonction ListVul() renvoie une liste LVul qui contient l'ensemble des vulnérabilités susceptibles d'affecter un ou plusieurs des éléments de l'environnement cible décrit par les données d'environnement logiciel 18. A ce stade, aucune étude du contexte logiciel n'est faite, il s'agit uniquement de récupérer toutes les vulnérabilités pouvant possiblement s'appliquer.

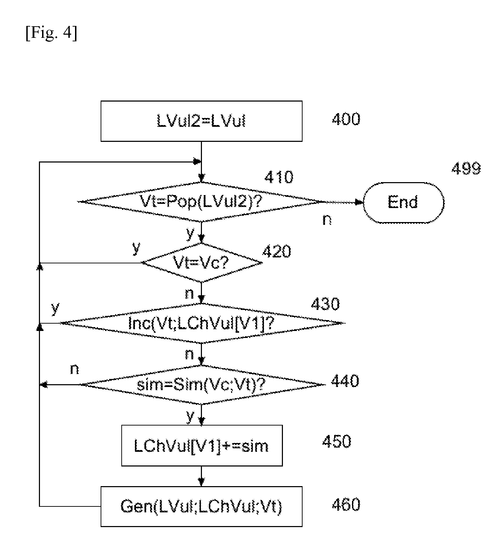

La liste de vulnérabilités LVul est ensuite fournie comme argument à une fonction ChVul() dans une opération 220 par l'analyseur 6. Comme cela apparaîtra avec les figures 3 et 4, la fonction ChVul() est une fonction récurrente et dont un exemple de réalisation sera maintenant décrit.

La fonction ChVul() comporte une boucle qui appelle une fonction récurrente en faisant varier son point de départ.

Ainsi, dans une opération 300 une liste locale LVul2 est initialisée avec la liste LVul, et la liste de chaînes de vulnérabilités LChVul est initialisée vide. Ensuite une boucle vient vider progressivement la liste LVul2 dans une opération 310 pour définir une vulnérabilité Vc de départ, puis une fonction récurrente Gen() est exécutée dans une opération 320. Cette fonction sera explicitée en référence à la figure 4.

Lorsque la liste LVul2 est vide, c'est que toutes les chaînes de vulnérabilités ayant pour point de départ une vulnérabilité de la liste LVul ont été explorées et la fonction ChVul() se termine dans une opération 399.

La figure 4 représente un exemple de mise en œuvre de la fonction Gen(). Cette fonction est de nature récurrente, et a pour rôle, à partir d'une vulnérabilité courante, de parcourir la liste de vulnérabilités LVul pour voir si cette vulnérabilité courante peut être liée à une autre vulnérabilité pour générer un maillon d'une chaîne de vulnérabilités. Comme on le verra, la nature récurrente de la fonction Gen() permet de construire de proche en proche une chaîne de vulnérabilités à partir d'une vulnérabilité de départ.

La fonction Gen() reçoit en argument la liste de vulnérabilités LVul, la liste de chaînes de vulnérabilité LChVul et la vulnérabilité courante Vc.

La fonction Gen() commence par une opération 400 dans laquelle la liste de vulnérabilités LVul est copiée dans une liste LVul2 pour parcourir la liste des vulnérabilités autres que la vulnérabilité courante.

Ensuite, dans une opération 410, la liste LVul2 est dépilée pour définir une vulnérabilité à tester Vt. Cette vulnérabilité à tester Vt fait ensuite l'objet de deux tests dans des opérations 420 et 430. En effet, du fait de la nature récursive de la fonction, il est important d'éviter des boucles de récurrence. Pour cette raison, l'opération 420 vérifie si la vulnérabilité à tester Vt est identique à la vulnérabilité courante Vc, ce qui induirait forcément une boucle de récurrence. De même, l'opération 430 vérifie si la vulnérabilité à tester Vt est déjà présente dans la chaîne de vulnérabilités associée à la vulnérabilité courante Vc dans la liste de chaînes de vulnérabilités LChVul. En effet, cela induirait également une boucle de récurrence.

Si l'un de ces tests est positif, alors la vulnérabilité à tester Vt est ignorée et la liste LVul2 est à nouveau dépilée avec l'opération 410.

Sinon, une fonction Sim() reçoit comme arguments la vulnérabilité courante Vc et la vulnérabilité à tester Vt dans une opération 440 et détermine si la vulnérabilité courante Vc peut être exploitée pour mettre en œuvre la vulnérabilité à tester Vt.

Dans la pratique, cela s'opère en comparant les conséquences de la vulnérabilité Vc et les moyens de la vulnérabilité à tester Vt. Si une des conséquences de la vulnérabilité courante Vc est identique à un moyen de la vulnérabilité à tester Vt, alors la fonction Sim() retourne un tuple sim qui contient la vulnérabilité à tester Vt, un identifiant de similarité indiquant le lien d'identité entre la ou les conséquences de la vulnérabilité courante Vc identique au ou aux moyens de la vulnérabilité à tester Vt, ainsi que cette ou ces conséquences.

S'il n'y a aucune conséquence de la vulnérabilité courante Vc identique à un moyen de la vulnérabilité à tester Vt, alors la fonction Sim() teste si une ou plusieurs conséquences de la vulnérabilité courante Vc est similaire à un moyen de la vulnérabilité à tester Vt comme décrit plus haut. Le cas échéant, la fonction Sim() retourne un tuple sim qui contient la vulnérabilité à tester Vt, un identifiant de similarité indiquant le lien de similarité (par exemple le score de similarité) entre la ou les conséquences de la vulnérabilité courante Vc similaire au ou aux moyens de la vulnérabilité à tester Vt, ainsi que cette ou ces conséquences.

Sinon, le tuple sim retourné est vide. L'opération 440 inclut enfin de tester le tuple sim. Si le tuple sim est vide, alors la vulnérabilité à tester Vt est ignorée et la liste LVul2 est à nouveau dépilée avec l'opération 410.

Sinon, la vulnérabilité à tester Vt est considérée comme pouvant faire partie d'une chaîne de vulnérabilité pour la vulnérabilité courante Vc, et le tuple sim est introduit dans la chaîne de vulnérabilités de la liste de chaînes de vulnérabilités associée à la vulnérabilité courante Vc. Enfin, dans une opération 460, la fonction Gen() est appelée par récurrence, avec la liste de vulnérabilités LVul, la liste de chaînes de vulnérabilités LChVul ainsi modifiée, et la vulnérabilité à tester Vt en tant que vulnérabilité courante Vc.

Lorsque toutes les vulnérabilités de la liste LVul2 ont été parcourues, la fonction Gen() s'arrête dans une opération 499. A la fin de la dernière instance de la fonction Gen(), la liste de chaînes de vulnérabilités LChVul constitue la liste de chaînes de vulnérabilités 20 de la figure 1.

Une fois l'opération 220 terminée, la liste de chaînes de vulnérabilités 20 générée par l'analyseur 6 est testée avec les données d'environnement logiciel 18 par le validateur 8 qui exécute une fonction Val() dans une opération 230.

La fonction Val() parcourt la liste de chaînes générées pour déterminer la validité des vulnérabilités composant ces chaînes dans l'environnement cible 12. Une vulnérabilité est valide si l'ensemble des caractéristiques de son contexte est inclus dans la configuration logicielle définie par les données d'environnement logiciel 18.

Suite à ce parcours, trois types de chaînes sont identifiées pour l'environnement cible 12: des chaînes invalides, des chaînes valides stockées dans une liste LFull 22 et des chaînes partiellement valides stockées dans une liste LPart 24.

Une chaîne ch est valide si : ∀*vul* ∈ *ch, CONTEXTE*(*vul*) ⊂ *C,* où vul est une vulnérabilité de la chaîne ch, C est la configuration logicielle de l'environnement cible 12 et CONTEXTE(vul) est l'ensemble de caractéristiques du contexte de la vulnérabilité vul. Une chaîne est invalide si : ∀*vul* ∈ *ch, CONTEXTE*(*vul*) ⊄ *C.* Une chaîne est partiellement valide si : ∃*vul* ∈ *ch, CONTEXTE*(*vul*) ⊂ *C.*

Cette fonction permet donc de déterminer, parmi toutes les chaînes de vulnérabilités potentiellement applicables à l'environnement cible 12, celles qui sont potentiellement exploitables compte tenu du contexte logiciel concret.

Une fois les listes LFull et LPart déterminées, elles sont testées en pratique afin de définir des chaînes d'exploits dans une opération 240. Pour cela, le testeur 10 accède à la base d'exploits 26 et exécute une fonction Test() pour retourner la liste d'exploits LExp.

Chaque chaîne valide, déterminée dans l'opération précédente, est exploitée sur l'environnement cible 12 en exploitant successivement les vulnérabilités qui la composent.

Cette phase d'exploitation d'une vulnérabilité d'une chaîne valide est réalisée par un code informatique développé par un opérateur, ou disponible publiquement ou générée automatiquement par un programme informatique.

A l'issue de l'exécution d'une chaîne valide d'attaques sur l'environnement cible 12, le résultat de cette attaque est les conséquences de la dernière vulnérabilité exploitée. En fonction de l'exploit final visé, l'opérateur peut exploiter la chaîne dans sa totalité ou partiellement.

Les chaînes partiellement valides, déterminées dans l'opération précédente, peuvent permettre à un opérateur ou un programme informatique de calculer le risque lors de l'installation d'un logiciel qui réduit l'invalidité de la chaîne dans un environnement cible 12. Cela permet à un opérateur de vérifier qu'aucune chaîne invalide ne deviendra valide sur l'environnement cible 12, suite à l'introduction d'une vulnérabilité par modification de la configuration de cet environnement.

En sortie, la liste LExp peut stocker quatre types de chaînes :
- Des chaînes d'attaques valides et exploitables, i.e. toutes les vulnérabilités associées à ces chaînes correspondent au contexte logiciel de l'environnement cible, et sont exploitables sur cet environnement. Il s'agit de chaînes d'attaques avec un taux de réussite de 100% ;
- Des chaînes valides et partiellement exploitables, i.e. toutes les vulnérabilités associées à ces chaînes correspondent au contexte logiciel de l'environnement cible, mais certaines vulnérabilités ne sont pas exploitables, c'est-à-dire que pour ces dernières le résultat de l'exécution de l'exploit est un échec. Le taux de réussite d'une chaîne est proportionnel au nombre vulnérabilités exploitables ;
- Des chaînes partiellement valides et exploitables, i.e. les vulnérabilités qui correspondent au contexte logiciel de l'environnement cible sont exploitables sur cet environnement. Le taux de réussite de chaque chaîne est proportionnel au nombre de vulnérabilités valides ; et
- Des chaînes partiellement valides et partiellement exploitables, i.e. certaines vulnérabilités qui sont valides dans une chaîne ne sont pas exploitables. Le taux de réussite d'une chaîne est le produit entre les ratios de vulnérabilités valides et les vulnérabilités exploitables. À titre d'exemple, si une chaîne possède cinq vulnérabilités, dont deux sont valides et seulement une vulnérabilité est exploitable parmi ces deux vulnérabilités valides, alors son taux de réussite est : 2/5*1/2 qui correspond à un taux de réussite de 20%.

L'invention permet donc de construire des chaînes d'attaques, entièrement ou partiellement exploitables dans un environnement cible, ce qui permet à la fois de valider des vulnérabilités connues et observables sur l'environnement cible, et aussi d'évaluer plus efficacement le risque d'une attaque lors de la mise à jour de la configuration logicielle de l'environnement cible.

Cela permet aussi de rendre la gestion de vulnérabilités dans un environnement cible plus efficace, en priorisant plus finement les vulnérabilités à corriger ("patching" en anglais) présentes dans plusieurs chaînes ou celles qui réduisent les chaînes d'attaques, notamment la première vulnérabilité à exploiter dans une chaîne.

## Revendications

1. Procédé mis en œuvre en œuvre par ordinateur pour tester la cybersécurité d'un environnement cible, comprenant :
a Recevoir des données d'environnement cible comprenant des éléments logiciels,
b Accéder à une base de données de vulnérabilités, chaque vulnérabilité étant définie par un tuple associant un identifiant de vulnérabilité, une liste de moyens définissant les moyens utilisés pour exploiter la vulnérabilité, et une liste de conséquences définissant les conséquences pour un exploiter la vulnérabilité, et en extraire une liste de vulnérabilités comprenant toutes les vulnérabilités comprenant un identifiant de vulnérabilité associé à un élément logiciel compris dans les données d'environnement cible,
c Construire une liste de chaînes de vulnérabilités à partir de la liste de vulnérabilités en initialisant au moins un couple comprenant une liste vide comme liste courante et l'une des vulnérabilités de la liste de vulnérabilités comme vulnérabilité courante, et pour chaque couple, en exécutant les opérations suivantes
c.1. Pour chaque vulnérabilité donnée de la liste de vulnérabilités distincte de la vulnérabilité courante et absente des tuples de la liste courante, comparer les conséquences de la vulnérabilité courante avec les moyens de la vulnérabilité donnée, et,
c.2. À chaque fois qu'une similarité entre une conséquence de la liste de conséquences de la vulnérabilité courante avec un moyen de la liste de moyens de la vulnérabilité donnée est trouvée,
c.2.i. Définir une ou plusieurs nouvelles chaînes en ajoutant à chacune des chaînes de la liste courante dont le dernier tuple comprend la vulnérabilité courante un tuple associant la vulnérabilité donnée, un identifiant de similarité, la conséquence de la liste de conséquences de la vulnérabilité courante, et le moyen de la liste de moyens de la vulnérabilité donnée,
c.2.ii. Ajouter la ou les nouvelles chaînes à la liste de chaînes de vulnérabilités,
c.2.iii. Répéter les opérations c.1. et c.2. avec la vulnérabilité donnée comme vulnérabilité courante, et la liste de chaînes de vulnérabilités comme liste courante.

2. Procédé selon la revendication 1, dans lequel l'opération c. comprend l'initialisation d'autant de couples qu'il y a de vulnérabilités dans la liste de vulnérabilités.

3. Procédé selon la revendication 1 ou 2, dans lequel l'opération c.2. comprend la détermination d'une valeur de similarité entre une conséquence de la liste de conséquences de la vulnérabilité courante et un moyen de la liste de moyens de la vulnérabilité donnée, et la détermination du fait que cette valeur de similarité est strictement supérieure à un seuil choisi.

4. Procédé selon la revendication 3, dans lequel le seuil choisi est nul.

5. Procédé selon la revendication 3 ou 4, dans lequel lorsque la conséquence de la liste de conséquences de la vulnérabilité courante est identique au moyen de la liste de moyens de la vulnérabilité donnée, la valeur de similarité vaut 1.

6. Procédé selon l'une des revendications précédentes, dans lequel les données d'environnement cible comprennent en outre des données de configuration d'élément logiciel et des données de relations entre éléments logiciels, dans lequel le tuple définissant une vulnérabilité comprend en outre une liste de données de contexte définissant le contexte logiciel dans lequel la vulnérabilité peut être exécutée, le procédé comprenant en outre
d Comparer les listes de données de contexte des vulnérabilités de chaque chaîne de vulnérabilité dans la liste de chaînes de vulnérabilités avec les données les données de configuration et/ou les données de relations entre éléments logiciels, et
d.1. Stocker dans une première liste les chaînes de vulnérabilités dont les vulnérabilités comprennent des listes de données de contexte qui sont toutes contenues dans les données de configuration et/ou les données de relations entre éléments logiciels, et
d.2. Stocker dans une deuxième liste les chaînes de vulnérabilités dont certaines seulement des vulnérabilités comprennent des listes de données de contexte contenues dans les données de configuration et/ou les données de relations entre éléments logiciels.

7. Procédé selon la revendication 6, comprenant en outre :
e. Obtenir des exploits correspondants aux vulnérabilités des chaînes de vulnérabilités de la première liste et de la deuxième liste, mettre en œuvre les chaînes des vulnérabilités de la première liste et de la deuxième liste avec ces exploits, et retourner les chaînes en les classant en fonction de leur appartenance à la première liste ou à la deuxième liste et en fonction du taux de réussite de leur mise en œuvre.

8. Programme d'ordinateur comprenant des instructions pour exécuter le procédé selon l'une des revendications 1 à 7 lorsqu'il est exécuté sur un ordinateur.

9. Support de stockage de données sur lequel est enregistré ce programme d'ordinateur selon la revendication 8.

10. Système informatique comprenant un processeur couplé à une mémoire sur laquelle est enregistré le programme d'ordinateur de la revendication 8.

## Patentansprüche

1. Computerimplementiertes Verfahren zum Testen der Cybersicherheit einer Zielumgebung, umfassend:
a Empfangen von Zielumgebungsdaten, die Softwareelementen umfassen,
b Zugreifen auf eine Schwachstellendatenbank, wobei jede Schwachstelle durch ein Tupel definiert wird, das eine Schwachstellenkennung, eine Liste mit Mitteln,
welche die zum Ausnutzen der Schwachstelle verwendeten Mittel definiert, und eine Liste mit Konsequenzen, welche die Konsequenzen bei einem Ausnutzen der Schwachstelle definiert, verknüpft, und Extrahieren einer Liste mit Schwachstellen daraus, die alle Schwachstellen umfasst,
die eine Schwachstellenkennung umfassen, die mit einem in den Zielumgebungsdaten enthaltenen Softwareelement verknüpft ist,
c Erstellen einer Liste mit Schwachstellenketten ausgehend von der Liste mit Schwachstellen, indem mindestens ein Paar initialisiert wird, das eine leere Liste als aktuelle Liste und eine der Schwachstellen der Liste mit Schwachstellen als aktuelle Schwachstelle umfasst, und indem für jedes Paar die folgenden Operationen ausgeführt werden
c.1. Für jede gegebene Schwachstelle der Liste mit Schwachstellen, die verschieden von der aktuellen Schwachstelle ist und in den Tupeln der aktuellen Liste fehlt, Vergleichen der Konsequenzen der aktuellen Schwachstelle mit den Mitteln der gegebenen Schwachstelle, und,
c.2. Jedes Mal, wenn eine Ähnlichkeit zwischen einer Konsequenz der Liste mit Konsequenzen der aktuellen Schwachstelle mit einem Mittel der Liste mit Mitteln der gegebenen Schwachstelle gefunden wird,
c.2.i. Definieren einer oder mehrerer neuer Ketten, indem zu jeder der Ketten der aktuellen Liste, deren letztes Tupel die aktuelle Schwachstelle umfasst, ein Tupel hinzugefügt wird, das die gegebene Schwachstelle, eine Ähnlichkeitskennung, die Konsequenz der Liste mit Konsequenzen der aktuellen Schwachstelle und das Mittel der Liste mit Mitteln der gegebenen Schwachstelle verknüpft,
c.2.ii Hinzufügen der neuen Kette(n) zu der Liste mit Schwachstellenketten,
c.2.iii Wiederholen der Operationen c.1. und c.2. mit der gegebenen Schwachstelle als aktuelle Schwachstelle und der Liste mit Schwachstellenketten als aktuelle Liste.

2. Verfahren nach Anspruch 1, wobei die Operation c. die Initialisierung von ebenso vielen Paaren umfasst, wie Schwachstellen in der Liste mit Schwachstellen vorhanden sind.

3. Verfahren nach Anspruch 1 oder 2, wobei die Operation c.2. das Bestimmen eines Ähnlichkeitswerts zwischen einer Konsequenz der Liste mit Konsequenzen der aktuellen Schwachstelle und einem Mittel der Liste mit Mitteln der gegebenen Schwachstelle und das Bestimmen der Tatsache, dass dieser Ähnlichkeitswert strikt größer ist als ein gewählter Schwellenwert ist, umfasst.

4. Verfahren nach Anspruch 3, wobei der gewählte Schwellenwert null ist.

5. Verfahren nach Anspruch 3 oder 4, wobei, wenn die Konsequenz der Liste mit Konsequenzen der aktuellen Schwachstelle identisch mit dem Mittel der Liste mit Mitteln der gegebenen Schwachstelle ist, der Ähnlichkeitswert 1 ist.

6. Verfahren nach einem der vorhergehenden Ansprüche, wobei die Zielumgebungsdaten ferner Softwareelement-Konfigurationsdaten und Beziehungsdaten zwischen Softwareelementen umfassen, wobei das eine Schwachstelle definierende Tupel ferner eine Liste mit Kontextdaten umfasst, die den Softwarekontext definieren, in dem die Schwachstelle ausgeführt werden kann, wobei das Verfahren ferner umfasst
d Vergleichen der Listen mit Kontextdaten der Schwachstellen jeder Schwachstellenkette in der Liste mit Schwachstellenketten mit den Konfigurationsdaten und/oder den Beziehungsdaten zwischen Softwareelementen, und
d.1. Speichern der Schwachstellenketten, deren Schwachstellen Listen mit Kontextdaten umfassen, die alle in den Konfigurationsdaten und/oder den Beziehungsdaten zwischen Softwareelementen enthalten sind, in einer ersten Liste, und
d.2. Speichern der Schwachstellenketten, bei denen nur einige der Schwachstellen Listen mit Kontextdaten umfassen, die in den Konfigurationsdaten und/oder den Beziehungsdaten zwischen Softwareelementen enthalten sind, in einer zweiten Liste.

7. Verfahren nach Anspruch 6, umfassend ferner:
e. Erhalten von Exploits, die den Schwachstellen der Schwachstellen der ersten Liste und der zweiten Liste entsprechen, Implementieren der Schwachstellenketten der ersten Liste und der zweiten Liste mit diesen Exploits, und Zurückgeben der Ketten, wobei sie in Abhängigkeit von ihrer Zugehörigkeit zu der ersten Liste oder zu der zweiten Liste und in Abhängigkeit vom Grad des Erfolgs ihrer Implementierung klassifiziert werden.

8. Computerprogramm, das Anweisungen umfasst, die bei seiner Ausführung auf einem Computer das Verfahren nach einem der Ansprüche 1 bis 7 ausführen.

9. Datenspeichermedium, auf dem dieses Computerprogramm nach Anspruch 8 gespeichert ist.

10. Rechnersystem, das einen Prozessor umfasst, der mit einem Speicher gekoppelt ist, auf dem das Computerprogramm nach Anspruch 8 gespeichert ist.

## Claims

1. A computer-implemented method for testing the cybersecurity of a target environment, including:
a Receiving target environment data including software elements,
b Accessing a vulnerability database, wherein each vulnerability is defined by a tuple that associates a vulnerability identifier, a list of means that defines the means used to exploit the vulnerability, and a list of consequences that defines the consequences of an exploiting of the vulnerability, and extracting therefrom a list of vulnerabilities that includes all vulnerabilities including a vulnerability identifier associated with a software element included in the target environment data,
c Constructing a list of vulnerability chains based on the list of vulnerabilities by initialising at least one couple that includes an empty list as the current list and one of the vulnerabilities in the list of vulnerabilities as the current vulnerability and, for each couple, executing the following operations
c.1 For each given vulnerability in the vulnerability list that is distinct from the current vulnerability and absent in the tuples of the current list, comparing the consequences of the current vulnerability with the means of the given vulnerability, and,
c.2 Each time a similarity is found between a consequence in the list of consequences for the current vulnerability and a means in the list of means for the given vulnerability,
c.2.i. Defining one or more new chains by adding, to each of the chains in the current list whose last tuple includes the current vulnerability, a tuple that associates the given vulnerability, a similarity identifier, the consequence in the list of consequences for the current vulnerability, and the means in the list of means for the given vulnerability,
c.2.ii. Adding the one or more new chains to the list of vulnerability chains,
c.2.iii. Repeating the operations c.1. and c.2. with the given vulnerability as the current vulnerability and the list of vulnerability chains as the current list.

2. A method according to claim 1, wherein the operation c. includes initialising as many couples as there are vulnerabilities in the vulnerability list.

3. A method according to claim 1 or 2, wherein the operation c.2. includes determining a similarity value between a consequence in the list of consequences for the current vulnerability and a means in the list of means for the given vulnerability, and determining whether this similarity value is strictly greater than a selected threshold.

4. A method according to claim 3, wherein the selected threshold is zero.

5. A method according to claim 3 or 4, wherein when the consequence in the list of consequences for the current vulnerability is identical to the means in the list of means for the given vulnerability, the similarity value is 1.

6. A method according to one of the preceding claims, wherein the target environment data further include software-element configuration data and software-element interrelationship data, wherein the tuple that defines a vulnerability further includes a list of context data that define the software context in which the vulnerability can be executed, wherein the method further includes
d Comparing the lists of vulnerability context data of each vulnerability chain in the list of vulnerability chains with the configuration data and/or the software-element interrelationship data, and
d.1 Storing, in a first list, the vulnerability chains whose vulnerabilities include lists of context data that are entirely contained in the configuration data and/or the software-element interrelationship data, and
d.2 Storing, in a second list, the vulnerability chains for which only some of the vulnerabilities include lists of context data contained in the configuration data and/or the software-element interrelationship data.

7. A method according to claim 6, further including:
e. Obtaining exploits corresponding to the vulnerabilities of the vulnerability chains in the first list and in the second list, implementing the vulnerability chains in the first list and in the second list with these exploits, and returning the chains by classifying them according to whether they belong to the first list or the second list and according to the success rate of their implementation.

8. A computer program including instructions for executing the method according to one of claims 1 to 7 when it is executed on a computer.

9. A data storage medium on which the computer program according to claim 8 is stored.

10. A computer system including a processor coupled to a memory on which the computer program of claim 8 is stored.
